# EUROPEAN PATENT APPLICATION

(11) **EP 3 025 822 A1**
(43) Date of publication of application: **01.06.2016**
(21) Application number: 15003373.6
(22) Date of filing: 25.11.2015
(51) Int. Cl.: B23Q 1/03, B23Q 17/24

(54) **APPARATUS FOR SHAPING THE WORKTABLE IN WOODWORKING MACHINES**

(30) Priority: 27.11.2014 IT RN20140039
(71) Applicant: Masterwood S.p.A., 47921 Rimini (RN) (IT)
(72) Inventor: MUTI, Giancarlo, 47921 Rimini (RN) (IT)
(74) Representative: Montebelli, Marco

(57) **Abstract**

An apparatus for shaping a worktable in woodworking machines comprises a plurality of table sections (1), movable along a first direction (x), and at least one gripping unit (2) for each table section (1), movable along a second direction (y) which is orthogonal to the first direction (x). The apparatus (10) also comprises a plurality of movable locating elements (3), associated with each table section (1) and with each gripping unit (2), suitable for identifying the position of the table sections (1) and gripping units (2), a first detecting device (4a), fixed to the machine (20) and oriented along the first direction (x), and at least one second detecting device (4b), associated with each table section (1) and oriented along the second direction (y), where the locating elements (3) pass from a home position, in which they cannot be intercepted by the detecting devices (4a, 4b), to an operating position, in which they are intercepted by the detecting devices (4a, 4b), in such a way as to define the position of the table sections (1) and of the gripping units (2).

## Description

The invention relates to an apparatus for shaping the worktable in woodworking machines.

In the sector of woodworking machines, the method of shaping the supporting table on which the workpieces to be machined are placed deserves special attention.

In fact, while on one hand such a table should be able to support workpieces having very different shapes and outlines which may even be very irregular, it should also involve the minimum possible use of materials and maximum possible freedom of action of the machining heads which must perform the machining on the unmachined workpieces.

For this reason, the shaping of worktables constituted of table sections movable along an assigned direction is extremely widespread. On each table section there are gripping units (for example, suction cups) movable along a direction perpendicular to the previous direction. In this way, it is possible to define a separate set of supporting points, on which to rest the workpiece to be machined, said points being located in variable positions depending on the dimensions and shape of the self-same workpiece.

It is common practice to use metric rulers which allow correct positioning of the table sections along an assigned direction and of the gripping units on each table section along a perpendicular direction. This method, although simple and inexpensive, has the disadvantage of not preventing any possible positioning errors by the operator.

For this reason several technical solutions have been proposed which allow the operator to check the correct positioning of the table sections and the gripping units.

For example, document DE 20308354 relates to a positioning system for suction cups (or in general, for gripping units) which uses LEDs distributed along one side of the movable table sections, in which a control device lights up the LEDs corresponding to the position which must be occupied by the suction cup.

However, that solution involves the use of a huge number of LEDs to obtain an acceptable definition of the positions which can be occupied by the gripping units, a number which increases proportionally to the dimensions of the table sections and therefore to the distance between the possible positions of the gripping units.

Document WO 2012101608 describes a woodworking machine in which the worktable is constituted of movable table sections provided with a plurality of gripping units, which are in turn movable along the table sections orthogonally to the direction of movement of the self-same table sections. Both the table sections and the gripping units are provided with permanent magnets which interact, by means of the respective magnetic fields, with fixed magnetic field detectors positioned along the directions of movement of the table sections and the gripping units.

Based on the correspondence between the flow density values measured and the reference values, the stopping positions of the table sections and the gripping units suitable for machining each workpiece are determined.

The absence of contact between the detectors and the magnets guarantees great precision in defining the worktable, but that is achieved with very high costs due to the large number of magnets used.

The aim of this invention is, therefore, to eliminate the above-mentioned disadvantages.

The invention, as described in the claims, achieves the aim thanks to devices for detecting the position of movable locating elements which are fixed to the table sections and to the gripping units.

The main advantage of this invention is basically the fact that the number of table sections and gripping units which form the worktable becomes completely arbitrary.

Moreover, they are positioned more precisely, since the references are not separate, but continuous, meaning that the theoretical position and the actual position are identical.

Finally, the instrumentation necessary involves costs which are much lower than those of the prior art devices operating with similar precision, and in any case irrespective of the dimensions of the worktable area.

Further advantages and features of the invention are more apparent in the detailed description which follows, with reference to the accompanying drawings, which illustrate an example embodiment of it without limiting the scope of the invention, in which:
- Figure 1 is a perspective top view of the invention, with some parts cut away to better illustrate others;
- Figure 2 is a front view, along a first direction (x) of a detail of the invention;

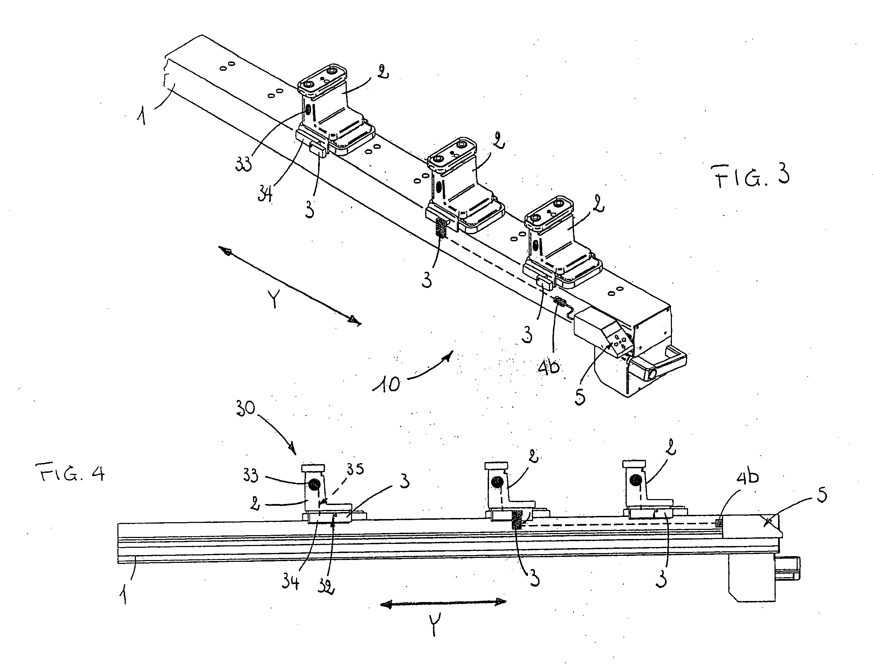

- Figure 3 is a perspective top view of a detail of the invention;
- Figure 4 is a side view of the detail of Figure 3, along a second direction (y).

An apparatus for shaping a worktable in woodworking machines comprises a plurality of table sections 1, movable along a first direction x, and at least one gripping unit 2 for each table section 1, movable along a second direction y which is orthogonal to the first direction x. The apparatus 10 also comprises a plurality of movable locating elements 3, associated with each table section 1 and with each gripping unit 2 and suitable for identifying the position of the table sections 1 and gripping units 2. In fact, the locating elements 3 can pass from a home position, in which they are within the dimensions of the table sections 1 and of the gripping units 2 respectively, to an operating position, in which they project from said dimensions. For this purpose, the apparatus 10 comprises a first detecting device 4a, fixed to the machine 20 and oriented along the first direction x, and at least one second detecting device 4b, associated with a table section 1 and oriented along the second direction y. When the locating elements 3 are in the home position, they cannot be intercepted by the detecting devices 4a, 4b, whilst when they are in the operating position, they are intercepted by the detecting devices 4a, 4b, in such a way as to identify the position of the table sections 1 and of the gripping units 2 with which the locating elements 3 are associated.

In order to be able to visually verify that the desired position has been reached, the apparatus 10 comprises a display 5 associated with each movable table section 1, which shows both the position of the gripping units 2 supported by the table section 1, and the position of the self-same table section 1. Moreover, the apparatus 10 may be provided with acoustic and/or visual signals which indicate when the correct position has been reached by the table sections 1 and/or the gripping units 2.

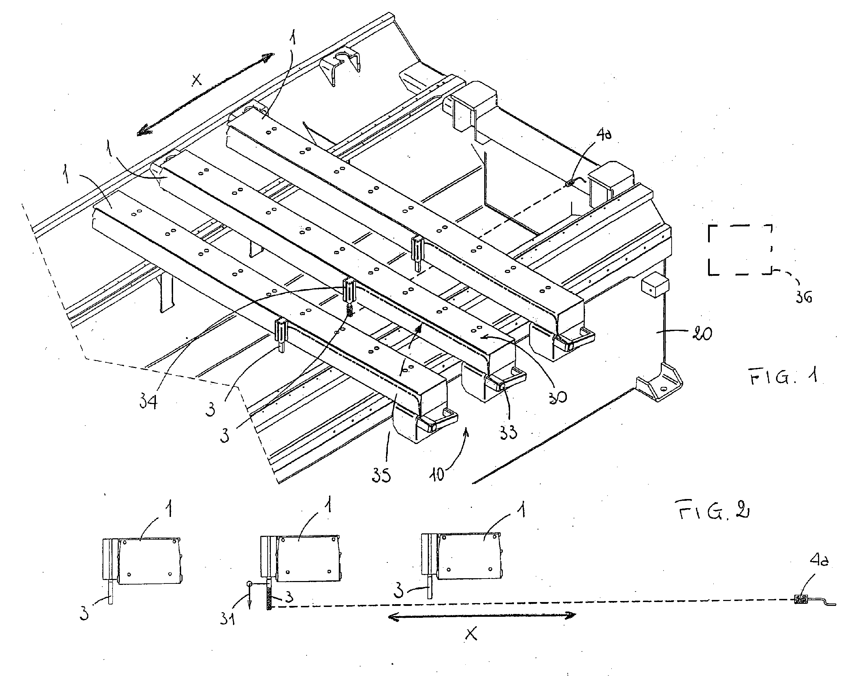

The movement of the locating elements 3 may be achieved in various ways. For that reason, the apparatus 10 comprises an actuating device 30, constituted of control elements 33 and actuators 34, which are connected to each other by suitable connecting means 35. The control elements 33 are preferably constituted of push-buttons directly accessible by the operator, whilst the actuators 34 may be of the pneumatic, electric or magnetic type. If the machine 20 is a numeric control machining centre, the actuators 34 may be controlled by the numeric control 36 which manages the machine, schematically illustrated with a dashed line in Figure 1. In the example illustrated in the figures, the movable locating elements 3 associated with the table sections 1 comprise a linear guide 31, in such a way as to allow them to slide for passing from a retracted home position to an extracted operating position, and vice versa. The movable locating elements 3 associated with the gripping units 2 comprise a hinge 32, in such a way as to allow them to rotate for passing from a home position to an operating position, and vice versa.

The detecting devices 4a, 4b for detecting the position of the locating elements 3 may also use various principles. The preferred ones seem to be laser sensors and ultrasound sensors, suitable for the purpose due to their measuring range, precision and inexpensiveness.

## Claims

1. An apparatus for shaping a worktable in woodworking machines, comprising a plurality of table sections (1), movable along a first direction (x), and at least one gripping unit (2) for each table section (1), movable along a second direction (y) orthogonal to the first direction (x), **characterised in that** it comprises a plurality of movable locating elements (3), associated with each table section (1) and with each gripping unit (2) and suitable for identifying the position of the table sections (1) and gripping elements (2), a first detecting device (4a), fixed to the machine (20) and oriented along the first direction (x), and at least one second detecting device (4b), fixed to a table section (1) and oriented along the second direction (y), where the locating elements (3) are designed to pass from a home position, in which they cannot be intercepted by the detecting devices (4a, 4b), to an operating position, in which they are intercepted by the detecting devices (4a, 4b), in such a way as to define the position of the table sections (1) and the gripping units (2).

2. The apparatus according to claim 1, **characterised in that** it comprises at least one display (5) associated with a movable table section (1), designed to show the position of the gripping units (2) supported by the table section (1) and of the self-same table section (1).

3. The apparatus according to claim 1, **characterised in that** it comprises an actuating device (30), constituted of control elements (33) and actuators (34), being connected to one another by suitable connecting means (35).

4. The apparatus according to claim 3, **characterised in that** the actuating device (30) comprises a numeric control (36).

5. The apparatus according to claim 1, **characterised in that** the movable locating elements (3) associated with the table sections (1) comprise a linear guide (31), in such a way as to allow them to slide for passing from a retracted home position to an extracted operating position, and vice versa.

6. The apparatus according to claim 1, **characterised in that** the movable locating elements (3) associated with the gripping units (2) comprise a hinge (32), in such a way as to allow them to rotate for passing from a home position to an operating position, and vice versa.

7. The apparatus according to claim 1, **characterised in that** the detecting device (4a; 4b) is a laser reader.

8. The apparatus according to claim 1, **characterised in that** the detecting device (4a; 4b) is an ultrasound sensor.
